# EUROPEAN PATENT APPLICATION

(11) **EP 4 492 763 A1**
(43) Date of publication of application: **15.01.2025**
(21) Application number: 23184705.4
(22) Date of filing: 11.07.2023
(51) Int. Cl.: H04M 3/51, H04M 3/523

(54) **METHOD FOR CONDUCTING AN EMERGENCY COMMUNICATION, USER EQUIPMENT, SYSTEM OR MOBILE COMMUNICATION NETWORK, PROGRAM AND COMPUTER PROGRAM PRODUCT**

(71) Applicant: Deutsche Telekom AG, 53113 Bonn (DE)
(72) Inventor: BÜCHTER, Martin, 53840 Troisdorf (DE); LAUSTER, Reinhard, 3100 St. Pölten (AT)
(74) Representative: Schwöbel, Thilo K.

(57) **Abstract**

The present invention relates to a method for conducting an emergency communication using a user equipment in a country, or a geographic region within a country, being part of the coverage area of a mobile communication network,
wherein, in case of an emergency situation, a normal specific normal call is initiated, by the user equipment, to a service provider, wherein an emergency communication is initiated, from the service provider and in dependency of the location of the user equipment, to a specific public safety answering point,
wherein, in order for the emergency communication to be conducted to the specific public safety answering point, a ledger structure is involved and the method comprises the following steps:
-- in a first step, the service provider transmits a first set of data to the ledger structure,
-- in a second step and in response to receiving the first set of data from the service provider, the ledger structure transmits a second set of data to the service provider,
-- in a third step, the specific normal call is routed to the specific public safety answering point and the specific public safety answering point receives at least a third set of data comprising at least part of the first set of data and/or of the second set of data.

## Description

### BACKGROUND

The present invention relates a method for conducting an emergency communication using a user equipment in a country, or a geographic region within a country, being part of the coverage area of a mobile communication network, wherein, in case of an emergency situation, a specific normal call is initiated, by the user equipment, to a service provider, wherein an emergency communication is initiated, from the service provider and in dependency of the location of the user equipment, to a specific public safety answering point.

Furthermore, the present invention relates to a user equipment for conducting an emergency communication using a user equipment in a country, or a geographic region within a country, being part of the coverage area of a mobile communication network, wherein, in case of an emergency situation, a specific normal call is initiated, by the user equipment, to a service provider, wherein an emergency communication is initiated, from the service provider and in dependency of the location of the user equipment, to a specific public safety answering point.

Additionally, the present invention relates to a system or to a mobile communication network for conducting an emergency communication using a user equipment in a country, or a geographic region within a country, being part of the coverage area of a mobile communication network, wherein, in case of an emergency situation, a specific normal call is initiated, by the user equipment, to a service provider, wherein an emergency communication is initiated, from the service provider and in dependency of the location of the user equipment, to a specific public safety answering point.

Furthermore, the present invention relates to a program and to a computer program product for conducting an emergency call using a user equipment in a country, or a geographic region within a country according to the inventive method.

Linked to the nature of emergency calls or eCalls, such calls need to be terminated or delivered in a very reliable manner as they are typically related to emergency situations where it is of utmost importance to act and/or to transmit an information quickly and with the highest possible grade of service. Of course, this is also true for mobile originated emergency calls that are handled by mobile communication networks in case of a user of such a mobile communication network is placing such an emergency call using a user equipment.

eCall is a Europe-wide initiative with the aim of providing rapid assistance to drivers involved in an accident. There are two variants according to certain criteria:
-- the pan-European eCall uses a specific emergency number, especially 112, to send data and to directly establish the voice channel and transmit accident-related data between the occupants of the vehicle and rescue services (emergency call center or public safety answering point).
-- alternatively, customers and original equipment manufacturers (especially of vehicles) may also choose to engage a private eCall service being operated by third-party providers (or third party service provider, TPSP); in this case, an activated call (or Telematic Service Provider eCall) is connected to a call center using a normal phone number (without the privileges of real emergency calls); the TPS eCall does not replace the public pan-European 112 eCall, which, as mentioned above, is based on the emergency number 112; it is often the case that original equipment manufacturers have prioritized TSP eCalls in their vehicle configuration over Pan European eCalls. TSP eCall services, unlike the (Pan European) eCall, are not subject to harmonization; in particular, the set of third-party eCall data uses different means of transport. In the event of a true emergency, calls are routed from the original equipment manufacturer call center receiving the TSP eCall to the most appropriate public safety answering point. However, the call routing from the original equipment manufacturer call center (or TPSP) to the public safety answering point is complex, e.g. due to specific laws that are prohibiting the original equipment manufacturer call center from establishing connections with public safety answering points that are as privileged (or, at least, similarly privileged) than emergency calls (e.g.in Germany mechanisms are in place that ensure that only 112/110 emergency calls are routed to an emergency call connection of a PSAP. Even if a caller dials the number of an emergency call connection of a PSAP as a normal call, such call would not be connected):

Hence, there is a need to address such situations where an original equipment manufacturer's call center has to handle a real emergency to be able to route a call related to that real emergency to a public safety answering point in a manner that is equivalent to a public emergency call / eCall that are based especially on public emergency numbers (e.g. 110 for the Police in Germany, 112 or 911 for emergencies).

### SUMMARY

An object of the present invention is to provide an effective and simple solution for providing a general applicability for conducting an emergency communication using a user equipment and a mobile communication network such that a normal call is initiated, by the user equipment, towards a service provider, and wherein an emergency communication towards a public safety answering point is nevertheless able to be realized. A further object of the present invention is to provide a corresponding user equipment, a corresponding system or mobile communication network, and a corresponding program and computer-readable medium.

The object of the present invention is achieved by a method for conducting an emergency communication using a user equipment in a country, or a geographic region within a country, being part of the coverage area of a mobile communication network, wherein, in case of an emergency situation, a specific normal call is initiated, by the user equipment, to a service provider, wherein an emergency communication is initiated, from the service provider and in dependency of the location of the user equipment, to a specific public safety answering point, wherein, in order for the emergency communication to be conducted to the specific public safety answering point, a ledger structure is involved and the method comprises the following steps:
-- in a first step, the service provider transmits a first set of data to the ledger structure,
-- in a second step and in response to receiving the first set of data from the service provider, the ledger structure transmits a second set of data to the service provider,
-- in a third step, the specific normal call is routed to the specific public safety answering point and the specific public safety answering point receives at least a third set of data comprising at least part of the first set of data and/or of the second set of data.
According to the present invention, it is advantageously possible that a general applicability is possible to be realized for conducting an emergency communication using a user equipment and a mobile communication network such that a normal call is initiated, by the user equipment, towards a service provider whereby an emergency communication towards a public safety answering point is able to be triggered.
Typically, the eCall TPSP model serves (or is used in) multiple jurisdictions; this means that a TPSP located in one country could receive (TPSP) eCalls from vehicles in multiple (or other) countries and - in case that emergency assistance is needed - would forward these calls to public safety answering points likewise in such multiple (or other) countries; hence, the original equipment manufacturer call center might be outside of the country in which the emergency occurs. Thus, knowledge of public safety answering points or public safety answering point contacts needs to be available, at the original equipment manufacturer call center across different countries. This also means that changes and/or failures (e.g. failure notifications or downtime announcements) of or regarding public safety answering points (especially information regarding new and/or discontinued and/or added and/or relocated public safety answering points) impose an increased need for coordination such that - merely by means of initiating a normal call towards the (third party) service provider - assistance is able to be provided by the correct (locally responsible) public safety answering point in the event of a real emergency.
This is important in view of a heterogeneous situation of public safety answering points in different countries: some countries have several independent regional emergency call centers (such as e.g. Spain or Germany), whereas a more fragmented situation prevails in other countries (e.g. Italy); moreover, country-specific laws might prohibit emergency calls from abroad to be received by emergency call centers (which is a potential problem in case that the original equipment manufacturer call center is located abroad (from the perspective of such a country)). Moreover, countries might set additional requirements, in their jurisdiction, for emergency calls and eCalls in addition to the harmonized and regulated eCall, and in order to meet such additional requirements, the TPSP eCall call centers (or service providers) would be required to be "tailor-made" for each such case, i.e. each such country.
Due to this (heterogenous) situation and the many different stakeholders, companies, authorities and institutions involved, it is challenging, especially if there is cross-border traffic, to provide a solution that provides the possibility to first place a normal call towards a (third party) service provider, and to nevertheless be able to be provided with assistance by the correct (locally responsible) public safety answering point in the event of a real emergency.
A solution according to the present invention is likewise beneficial from the perspective of a network operator as it acts supportively as a transitional solution in the transition from the CS (circuit switched) variant of EU eCall to NG (Next Generation) eCall, as especially today, 4G/5G (i.e. fourth generation / fifth generation) technology is applied for the original equipment manufacturer (third party) services, i.e. by such (third party) service providers.
Furthermore, a solution according to the present invention is likewise beneficial from the perspective of a public safety answering point:
Due to the presently comparatively high share of unintentionally initiated (or negligent or even abusive) eCalls, it is desirable, also from the perspective of a public safety answering point, to arrive at a two-step approach by means of which it is possible to sort out the real (or actual) emergency situations from the fake eCalls, this leading to a relief of the emergency services/public safety answering points. Hence, also from this point of view, the TPSP eCalls, i.e. the ones that go through a service provider or call center of an original equipment manufacturer, are able to provide real added value.

In conventionally known mobile communication networks, and especially regarding conventionally known methods of emergency call processing, TPSP eCalls might be able to be realized, albeit in a comparatively limited manner or, at least, in very limited circumstances, especially in very specific scenarios (of, e.g., the service provider being located in the same country of the user initiating the emergency communication). In such a scenario - in conventionally known mobile communication networks -, a user equipment (especially in case that the user equipment is aboard a vehicle, especially a car, and especially if mounted fixedly with or in the vehicle, the user equipment is, hereinafter, also called in-vehicle system, IVS) makes a call to the original equipment manufacturer call center or third party service provider; this corresponds to a normal call, and, since normal numbers (i.e. non-emergency call (or non-restricted) numbers) are used, the user equipment or IVS is fully registered and identifiable in the mobile communication network).
The service provider or original equipment manufacturer call center then determines (e.g. via the data sent) that it is a real emergency, and - from the data set - determines the location of the emergency. From the data received (e.g.: the type of emergency, the geographic location), the service provider or original equipment manufacturer call center attempts to call the public safety answering point assigned to the location of the emergency (i.e. the locally responsible public safety answering point). Especially, there is no direct connection from the user equipment or in-vehicle system to the public safety answering point in this scenario. Likewise, the provision of information as mandatory for regulated emergency calls (minimum set of data) is not guaranteed. The user equipment or in-vehicle system, the service provider (original equipment manufacturer call center) as well as the public safety answering point may contain a subscription (e.g. subscriber identity module or universal integrated circuit card) from different network operators and/or may be located in different countries (and/or connected to different networks there) - however, all such factors might contribute to the emergency communication not being handled as intended, as there might be the requirement that, e.g., the transmission of the emergency call accompanying data (here especially in relation to eCalls) between the service provider (or original equipment manufacturer call center) and the public safety answering point might (need to) take place verbally (hence causing a source of error / language problems with OEM call center abroad, etc.), and, especially, there is no direct connection between the user equipment or in-vehicle system and the public safety answering point; needless to say, the privileges as they apply to 112/110 / 911 emergency calls do likewise not apply.

According to the present invention, a method for conducting an emergency communication is proposed using a user equipment in a country, or a geographic region within a country, this country or geographic area or region being part of the coverage area of a mobile communication network. It is assumed, according to the present invention, that an emergency call (especially in case of an emergency situation) is able to be initiated, by the user equipment (or by an in-vehicle system) towards a service provider. This call (that might be, from the perspective of the user of the user equipment or of the in-vehicle system, regarded as an emergency call) is, according to the present invention, a normal call towards the service provider; hereinafter, this (normal) call is also called specific normal call, in order to be able to refer to such a call that is at least triggering an emergency communication according to the present invention. Hence, the specific normal call at least triggers the emergency communication, wherein the emergency communication is initiated, by the service provider and in dependency especially of the location of the user equipment, to a specific public safety answering point (especially in the region and/or country of the (current) location of the user equipment or in-vehicle system), and the specific normal call is a call, that is received by a call center (or service provider) and relates to a real emergency. According to the present invention, in order for the emergency communication to be conducted to the specific public safety answering point, a ledger structure is involved and the method comprises the following steps:
-- in a first step, the service provider transmits a first set of data to the ledger structure,
-- in a second step and in response to receiving the first set of data from the service provider, the ledger structure transmits a second set of data to the service provider,
-- in a third step, the specific normal call is routed to the specific public safety answering point and this public safety answering point receives at least a third set of data comprising at least part of the first set of data and/or of the second set of data.

It is thereby advantageously possible to provide a more reliable and robust emergency communication, and, hence, emergency call functionality and/or service. Especially, the ledger structure is or corresponds to a distributed and/or decentralized managed database (ledger e.g. for eCall) emergency calls:
Due to national competencies and many different companies or authorities and institutions involved, a centralized database for third party eCall operation might be an aim but is unlikely to be able to be realized.
According to the present invention, In order to securely store data or information regarding such highly distributed, flexible and dynamic data of eCall communication participants, it is proposed to use an implementation using a distributed ledger or ledger structure. The stored data and transactions can be viewed and stored by all authorized and authenticated communication participants. The participants jointly decide on an access authorization and consensus mechanism for the entries or changes to the eCall ledger or ledger structure.
Possible elements for the ledger include, e.g.:
-- IDs (e.g. URNs, phone numbers, CLIs,IMSIs),
-- pieces of location information (CellIDs, GNSS, Network based Location Info..)
-- pieces of rRuting information (IPx, PLMNs, Gateways)
-- service levele agreements (e.g. smart Contratcs, nat. regulators specifications)
-- security (e.g. priv. public keys)
-- eCall Transaction log (eCalls, charging, Logging, Statistics, ...).
Additionally, further potential elements include:
-- IMSI (International Mobile Subscriber Identity): Unique identification of mobile (LTE) subscriber Network (MME) gets the PLMN of the subscriber;
-- PLMN ID (Public Land Mobile Network Identifier): Unique identification of PLMN;
-- MSIN (Mobile Subscriber Identification Number): assigned by operator;
-- GUTI (Globally Unique Temporary UE Identity): To identify a UE between the UE and the MME on behalf of IMSI for security reason;
-- TIN (Temporary Identity used in Next Update): GUTI is stored in TIN parameter of UE's MM context. TIN indicates which temporary ID will be used in the next update;
-- S-TMSI (SAE Temporary Mobile Subscriber Identity): To locally identify a UE in short within a MME group (Unique within a MME Pool);
-- M-TMSI (MME Mobile Subscriber Identity): Unique within a MME;
-- GUMMEI (Globally Unique MME Identity): To identify a MME uniquely in global; GUTI contains GUMMEI;
-- MMEI (MME Identifier): To identify a MME uniquely within a PLMN; Operator commissions at eNBMMEI;
-- MMEGI (MME Group Identifier): Unique within a PLMN;
-- MMEC (MME Code): To identify a MME uniquely within a MME Group. S-TMSI contains MMEC;
-- C-RNTI (Cell- Radio Network Temporary Identifier): To identify an UE uniquely in a cell;
-- IMEI (International Mobile Equipment Identity): To identify a ME (Mobile Equipment) uniquely;
-- IMEI/SV (IMEI/Software Version): To identify a ME (Mobile Equipment) uniquely;
-- ECGI (E-UTRAN Cell Global Identifier): To identify a Cell in global (Globally Unique); EPC can know UE location based of ECGI;
-- ECI (E-UTRAN Cell Identifier): To identify a Cell within a PLMN;
-- PGW ID (PDN GW Identity): To identify a specific PDN GW (P-GW); HSS assigns P-GW for PDN (IP network) connection of each UE;
-- TAI (Tracking Area Identity): To identify Tracking Area; Globally uniqueTAI;
-- TAC (Tracking Area Code): To indicate eNB to which Tracking Area the eNB belongs (per Cell); Unique within a PLMN
-- PDN ID (Packet Data Network Identity): To identify an PDN (IP network), that mobile data user wants to communicate with PDN Identity (APN) is used to determine the P-GW and point of interconnection with a PDN with APN as query parameter to the DNS procedures, the MME will receive a list of candidate P-GWs, and then a P-GW is selected by MME with policy
-- TEID (Tunnel End Point identifier): To identify the end point of a GTP tunnel when the tunnel is established.

According to at least one embodiment of the present invention, it is advantageously possible and preferred that
-- either, in the third step, the service provider routes the specific normal call to the specific public safety answering point and transmits at least a part of the first set of data and/or of the second set of data to the specific public safety answering point
-- or, in a fourth step subsequent to the second step and prior to the third step, the service provider transmits at least a part of the first set of data and/or of the second set of data to a transit and/or terminating network, wherein the transit and/or terminating network routes the specific normal call to the specific public safety answering point and transmits at least a part of the first set of data and/or of the second set of data to the specific public safety answering point.

Thereby, it is advantageously possible to realize and implement the inventive method in a comparatively simple and efficient manner.

According to at least one embodiment of the present invention, it is furthermore advantageously possible and preferred that conducting the emergency communication, especially routing the specific normal call to the specific public safety answering point, involves or corresponds to at least one out of the following:
-- an emergency call, especially an emergency call related to a health-related emergency situation and/or related to an accident,
-- an eCall.

Thereby, it is advantageously possible to realize and implement the inventive method in a comparatively simple and efficient manner.

According to at least one embodiment of the present invention, it is still furthermore advantageously possible and preferred that the ledger structure corresponds to a federated permissioned ledger structure, especially an emergency call or eCall ledger structure, wherein especially the ledger structure corresponds to a data structure that is fraud-proof such that stored values are secured according to the current state of the art and/or the integrity of such data or stored values is able to be assured, especially by means of using proof-of-authority principles, especially based on the identity of the participating entities, wherein the participating entities especially comprise at least one or a plurality of the following:
-- service providers,
-- specific public safety answering point,
-- participating telecommunications networks,
-- user equipments, especially in-vehicle systems,
-- manufacturers of such user equipments or in-vehicle systems,
wherein especially the ledger structure is used for realizing or performing at least one out of the following:
-- an emergency call transaction log or eCall transaction log,
-- a decentralized access to the ledger structure is possible wherein a central instance authorizes access to the ledger structure.

Thereby, it is advantageously possible to realize and implement the inventive method in a comparatively simple and efficient manner.

According to the present invention, it is furthermore advantageously possible and preferred that the service provider and/or the transit and/or terminating network and/or the public safety answering point is able to authenticate with respect to the ledger structure, wherein the authentication process involves smart contracts that are executed on the ledger structure.

It is thereby advantageously possible to realize and implement the inventive method in a comparatively simple and efficient manner.

According to the present invention, it is furthermore advantageously possible and preferred that the authentication process and/or the execution of smart contracts involve to obtain at least one hash value of the data to be verified, wherein especially the at least one hash value is compared with a hash value stored in the ledger structure, especially in a blockchain structure thereof, wherein based on such comparison a decision, especially regarding an authentication process and/or regarding a smart contract is able to be taken,
wherein especially a mutual authentication involves to store, in the ledger structure, a hash value of the data to be authenticated, and the authenticity of such data is able to be verified by means of comparing the respective hash value with the originally stored hash value.

It is thereby advantageously possible to realize and implement the inventive method in a comparatively simple and efficient manner.

Furthermore according to the present invention, it is furthermore advantageously possible and preferred that the authentication process and/or the execution of smart contracts involve the service provider and/or the transit and/or terminating network and/or the public safety answering point having a public key information and a private key information, wherein the entities use the public key information of other entities in order to assure the authenticity of their messages and/or data and wherein the entities use the private key information to sign transactions and to assure that only authorized entities are able to modify the ledger structure,
wherein especially the data accompanying the call are stored for documentation in the ledger structure, wherein these data accompanying the call are able to be used for regulatory purposes, compliance, traceability of the connection, quality control or billing.

According to the present invention, it is furthermore advantageously possible and preferred that the first set of data comprises data related to the emergency situation, especially at least one out of the following:
-- an eCall minimum set of data (MSD)
-- PLMN ID of the VPLMN, especially to identify the network from which the call is originating, wherein the originating network can also be the HPLMN,
-- PLMN ID of the HPLMN, especially to allow for call backs in IMS-based systems, in case that the network from which the call is originating is not the HPLMN,
-- the position or location of the user equipment and/orthe direction and/or velocity of the user equipment, especially to further improve the position or location information, to be deployed for traffic warnings/ traffic organization/guidance for other traffic, to be used for legal purposes - exceeding the speed limit or not-, insurance related liabilities,
-- time when the emergency occurred and or the call / eCall was initiated , especially to be able to identify the appropriate PSAP being operational at the given time or to identify the original call in case of a multitude of calls related to an incident - overload prevention - and for statistical purposes,
-- Public Call ID, especially the MSISDN and/or an uniform resource name, URN, especially to identify and/or validate the subscription and/or user concerned and/or to prevent spoofing of calls,
-- Preferred Language, especially to ascertain that the call is routed to a PSAP that in the best case is able to communicate in the indicated language, to guide helpers on the spot of the emergency in choosing the preferred language, to ensure that further other than spoken communication is presented in the preferred language,
-- Sensor Data such as Acceleration and/or Temperature and/or the number of occupants in a vehicle, the number of occupants that were in the vehicle at the time the call was initiated,
-- Vital indication data such as heartrate, blood pressure, body temperature,
-- VIN (vehicle identification number) or further information about the specific vehicle, so that rescue workers attain an improved representation of the specific construction details of the vehicle or other technical means involved,
-- Freight carried, Warning of dangerous substances, especially to assist rescue workers to attain an improved representation of the situation, minimize risks of rescue workers
-- Database entries of a health record, especially regarding allergies and/or pre-existing maladies, especially to improve the treatment of the people in need.

It is thereby advantageously possible to realize and implement the inventive method in a comparatively simple and efficient manner.

Furthermore according to the present invention, it is furthermore advantageously possible and preferred that the second set of data comprises data provided by the ledger structure, especially at least one out of the following:
-- the applicable network to terminate the emergency call
-- and/or gateway for the subsequent network to handle the call -- the responsible public safety answering point for the type of emergency,
-- the public land mobile network ID of the network and/or gateway and/or its global navigation satellite system coordinates and/or its public key information,
-- routing information related to the emergency communication and/or related to the responsible network and/or gateway, especially gateway numbers and/or uniform resource names.

It is thereby advantageously possible to realize and implement the inventive method in a comparatively simple and efficient manner.

According to the present invention, it is furthermore advantageously possible and preferred that the third set of data comprises data transmitted to the specific public safety answering point, especially besides at least a part of the first set of data and/or of the second set of data and especially at least one out of the following:
-- the cell identifier information,
-- the packet data network identifier information.

It is thereby advantageously possible to realize and implement the inventive method in a comparatively simple and efficient manner.

Furthermore, the present invention relates to a user equipment for conducting an emergency communication using a user equipment in a country, or a geographic region within a country, being part of the coverage area of a mobile communication network, wherein, in case of an emergency situation, a specific normal call is initiated, by the user equipment, to a service provider, wherein an emergency communication is initiated, from the service provider and in dependency of the location of the user equipment, to a specific public safety answering point, wherein, in order for the emergency communication to be conducted to the specific public safety answering point, a ledger structure is involved and the user equipment is configured such that:
-- the service provider transmits a first set of data to the ledger structure,
-- in response to receiving the first set of data from the service provider, the ledger structure transmits a second set of data to the service provider,
-- the specific normal call is routed to the specific public safety answering point and the specific public safety answering point receives at least a third set of data comprising at least part of the first set of data and/or of the second set of data.

Furthermore, the present invention relates to a system or to a mobile communication network for conducting an emergency communication using a user equipment in a country, or a geographic region within a country, being part of the coverage area of a mobile communication network,
wherein, in case of an emergency situation, a normal specific normal call is initiated, by the user equipment, to a service provider, wherein an emergency communication is initiated, from the service provider and in dependency of the location of the user equipment, to a specific public safety answering point,
wherein, in order for the emergency communication to be conducted to the specific public safety answering point, a ledger structure is involved and the system or mobile communication network is configured such that:
   -- the service provider transmits a first set of data to the ledger structure,
   -- in response to receiving the first set of data from the service provider, the ledger structure transmits a second set of data to the service provider,
   -- the specific normal call is routed to the specific public safety answering point and the specific public safety answering point receives at least a third set of data comprising at least part of the first set of data and/or of the second set of data.

Additionally, the present invention relates to a program comprising a computer readable program code which, when executed on a computer or on a user equipment or on a network node of a mobile communication network, or on a public safety answering point or on a ledger structure or on a service provider, or in part on a user equipment and/or in part on a network node of a mobile communication network and/or in part on a public safety answering point and/or in part on a ledger structure and/or in part on a service provider, causes the computer or the user equipment or the network node of the mobile communication network or the public safety answering point or the ledger structure or the service provider to perform the inventive method.

Still additionally, the present invention relates to a computer-readable medium comprising instructions which when executed on a computer or on a user equipment or on a network node of a mobile communication network, or on a public safety answering point or on a ledger structure or on a service provider, or in part on a user equipment and/or in part on a network node of a mobile communication network and/or in part on a public safety answering point and/or in part on a ledger structure and/or in part on a service provider, causes the computer or the user equipment or the network node of the mobile communication network or the public safety answering point or the ledger structure or the service provider to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

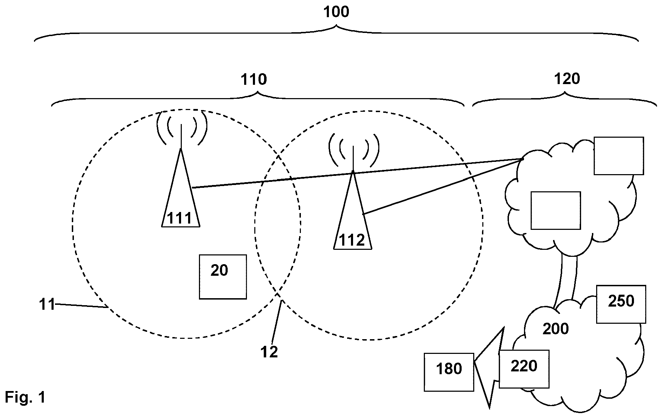

**Figure** 1 schematically illustrates a mobile communication network with a user equipment connected to the mobile communication network in a situation where the user equipment is attempting to conduct or to place an emergency call and/or to trigger an emergency communication by means of initiating a (specific) normal call to a service provider, wherein an emergency communication is initiated, from the service provider and in dependency of the location of the user equipment, to a specific public safety answering point.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100, especially a mobile communication network 100, is schematically shown. The mobile communication network 100 comprises an access network 110 and a core network 120, and a user equipment 20 is connected to the mobile communication network 100 via the access network 110. The mobile communication network 100 is especially realized as a mobile (cellular) communication network 100, and the access network 110 of the mobile communication network 100 exemplary comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 - if connected to or with the mobile communication network 100 - is connected, via a radio interface or air interface, to the first base station entity 111 of the access network 110 of the mobile communication network 100.
In case of an emergency situation, a specific normal call is initiated, by the user equipment 20, to a service provider 200, wherein an emergency communication is initiated, from the service provider 200 and in dependency of the location of the user equipment 20, to a specific public safety answering point 180.
In order for the emergency communication to be conducted to the specific public safety answering point 180, a ledger structure 250 is involved. The ledger structure 250 is especially part of or connected to, or, at least, accessible by the service provider 200. If applicable, the emergency communication - being initiated by the service provider 200 (as a consequence of the service provider 200 receiving the specific normal call from the user equipment 20) - also involves a transit and/or terminating network 220.

According to the present invention, in order for the emergency communication to be conducted to the specific public safety answering point 180, the method comprises the steps of, the service provider 200 transmitting a first set of data to the ledger structure 250 (in response to receiving the specific normal call from the user equipment 20), in response to receiving the first set of data from the service provider 200, the ledger structure 250 transmits a second set of data to the service provider 200, and the specific call being routed to the specific public safety answering point 180 and the specific public safety answering point 180 receiving at least a third set of data comprising at least part of the first set of data and/or of the second set of data.

Hence, in dependency of the current location of the user equipment 20, a specific public safety answering point 180 is selected, typically by the ledger structure 250 and/or by the service provider 200. Typically, in a country - or in a geographic region within a country - being part of the coverage area of the mobile communication network 100, a plurality of public safety answering points are realized or located, each of these public safety answering points being, typically, assigned to or associated with a certain geographical area (nevertheless, for the sake of simplicity, only one public safety answering point 180 is schematically represented in Figure 1). In case the specific normal call is initiated and routed to the service provider 200 while the user equipment 20 is located in a specific geographical area, such assignment of public safety answering points to geographical areas (or vice versa) entails that - in the third step of the inventive method - such specific normal call is routed or directed (or terminated or delivered) to the respective specific public safety answering point 180. However likewise for the sake of simplicity, neither geographical areas not their assignment to specific public safety answering points are represented in Figure 1.

According to the present invention, a method for conducting an emergency communication using a user equipment 20 is proposed. In case of an emergency situation, a specific normal call is initiated, by the user equipment 20, to the service provider 200. In turn, the service provider initiates, in dependency of the location of the user equipment 20, an emergency communication, to the specific public safety answering point 180. According to the present invention, this is achieved by means of using (or involving) the ledger structure 250: the service provider 200 transmits a first set of data to the ledger structure 250, and the ledger structure 250 - in response to receiving the first set of data from the service provider 200 - transmits a second set of data to the service provider 200; thereafter, the specific normal call is routed to the specific public safety answering point 180 and the specific public safety answering point 180 receives at least a third set of data comprising at least part of the first set of data and/or of the second set of data.

Especially according to the present invention, in the third step, the service provider 200 routes the specific normal call (directly) to the specific public safety answering point 180 and transmits at least a part of the first set of data and/or of the second set of data to the specific public safety answering point 180. Alternatively thereto, in a fourth step subsequent to the second step and prior to the third step, the service provider 200 transmits at least a part of the first set of data and/or of the second set of data to a transit and/or terminating network 220, wherein the transit and/or terminating network 220 routes the specific normal call to the specific public safety answering point 180 and transmits at least a part of the first set of data and/or of the second set of data to the specific public safety answering point 180. In any case, the specific normal call routed (or directed) to the specific public safety answering point 180, either directly from the service provider 200, or indirectly, via the transit and/or terminating network 220.

Especially according to the present invention, it is preferred that conducting the emergency communication - especially routing the specific normal call to the specific public safety answering point 180 - involves or corresponds to at least one out of the following:
-- an emergency call, especially an emergency call related to a health-related emergency situation and/or related to an accident,
-- an eCall.

It is furthermore preferred according to the present invention that the ledger structure 250 corresponds to a federated permissioned ledger structure, especially an emergency call or eCall ledger structure, wherein especially the ledger structure 250 corresponds to a data structure that is fraud-proof such that stored values are secured according to the current state of the art and/or the integrity of such data or stored values is able to be assured, especially by means of using proof-of-authority principles, especially based on the identity of the participating entities, wherein the participating entities especially comprise at least one or a plurality of the following:
-- service providers,
-- specific public safety answering point,
-- participating telecommunications networks,
-- user equipments, especially in-vehicle systems,
-- manufacturers of such user equipments or in-vehicle systems,
wherein especially the ledger structure 250 is used for realizing or performing at least one out of the following:
-- an emergency call transaction log or eCall transaction log,
-- a decentralized access to the ledger structure 250 is possible wherein a central instance authorizes access to the ledger structure 250.

Furthermore, the service provider 200 and/or the transit and/or terminating network 220 and/or the public safety answering point 180 is able to authenticate with respect to the ledger structure, wherein the authentication process especially involves smart contracts that are executed on the ledger structure 250.
Especially, the authentication process and/or the execution of smart contracts involve to obtain at least one hash value of the data to be verified, wherein especially the at least one hash value is compared with a hash value stored in the ledger structure 250, especially in a blockchain structure thereof, wherein based on such comparison a decision, especially regarding an authentication process and/or regarding a smart contract is able to be taken,
wherein especially a mutual authentication involves to store, in the ledger structure 250, a hash value of the data to be authenticated, and the authenticity of such data is able to be verified by means of comparing the respective hash value with the originally stored hash value.
Furthermore especially, the authentication process and/or the execution of smart contracts involve the service provider 200 and/or the transit and/or terminating network 220 and/or the public safety answering point 180 having a public key information and a private key information, wherein the entities use the public key information of other entities in order to assure the authenticity of their messages and/or data and wherein the entities use the private key information to sign transactions and to assure that only authorized entities are able to modify the ledger structure 250,
wherein especially the data accompanying the call are stored for documentation in the ledger structure 250, wherein these data accompanying the call are able to be used for regulatory purposes, compliance, traceability of the connection, quality control or billing.

In the following, an exemplary call flow is provided, regarding an exemplary situation of a third party eCall:
In a first processing step, the user equipment 20 or in-vehicle system makes a call (the specific normal call) to an original equipment manufacturer call center (service provider 200) in the same or another country/operator network; the user equipment 20 or in-vehicle system is fully registered in the network, i.e. no limited service state applies (as normal numbers are used). Optionally, a vendor ID (identifier information) and/or subscriber data/subscriber identifier / HPLMN ID or the like is transmitted.
The use of a federated permissioned eCall ledger (ledger structure 250) between the caller (i.e. the user equipment 20 or the in-vehicle system) and the original equipment manufacturer call center as the service provider 20 is possible according to the present invention but optional, i.e. not necessary, as this provides the possibility to integrate legacy in-vehicle systems; hence, the specific normal call initiated by the user equipment 20 or in-vehicle system towards the service provider 200 is not different to another (real) emergency call ('emergency call' from the perspective of the user equipment 20 or the in-vehicle system or its user) that is initiated using the same means, i.e. especially using a non-emergency call (not privileged) number.
In a second processing step, the service provider 200 (especially the original equipment manufacturer call center) determines that this is a true (or real) emergency, i.e. corresponds to an emergency situation: The service provider 200 (original equipment manufacturer call center) queries the federated permissioned eCall ledger (ledger structure 250) with the available data (e.g. type of emergency, location, preferred language etc...) to determine the responsible/appropriate (possibly: also contractually correct) terminating network (or/and optionally the responsible public safety answering point).
From the data set, the service provider 200 (or original equipment manufacturer call center) derives the identity of the network operator (e.g. PLMID, GNSS coordinates, Public Key) and the emergency routing information (Gatway numbers, URNs, ...) in which the emergency situation exists.
In a third processing step, the service provider 200 (or original equipment manufacturer call center) connects to the gateway node of the terminating network using the federated permissioned eCall ledger data (this corresponds to data traffic, not to an emergency call connection).
The service provider 200 (original equipment manufacturer call center) authenticates to the network using the federated permissioned eCall ledger (ledger structure 250). (The route via the terminating network has the advantage that the service provider 200 (original equipment manufacturer call center) does not need to be aware of any failures and appropriate routing to the public safety answering points; this corresponds to a simpler, more stable configuration). The network can also authenticate and authorize the service provider 200 (or original equipment manufacturer call center) via the ledger structure 250.
According to the present invention, the authentication process is especially done via smart contracts that are executed on the federated permissioned eCall ledger (ledger structure 250). According to the present invention, a smart contract is a self-executing contract that specifies the terms of an agreement and is automatically executed when the terms are met. The authentication process is able to be configured such, especially using smart contracts, that the hash value of the data to be verified is compared with the hash value stored in the blockchain and make a decision based on that.
In mutual authentication, the hash value of the data to be authenticated is written to the federated permissioned eCall ledger. to verify the authenticity of the data, the hash value is compared to the original hash value.
Since the federated permissioned eCall ledger (ledger structure 250) is especially an immutable data structure, the hash value cannot be manipulated, which guarantees the integrity of the data and thus the authentication of the parties involved (service provider 200 (or original equipment manufacturer call center), the network operator, and the public safety answering point 180).
To perform authentication, the parties especially need to have a private key and a public key; public keys are used to verify the identity of the user and ensure that transactions originate from the correct source, whereas the private key is used to sign transactions and ensure that only authorized parties can make changes to the federated permissioned eCall ledger (ledger structure 250).
In a fourth processing step, the terminating network may also perform validation of the service provider 200 or original equipment manufacturer call center (via the federated permissioned eCall ledger or ledger structure 250) and additionally the in-vehicle system, if necessary.
The service provider 200 (original equipment manufacturer call center) routes the eCall to the handover points of the responsible network operator and also transfers the emergency situation data received from the in-vehicle system to the network operator.
This gateway/transit network can perform the same procedure to the terminating network or to another transit network or the designated and authorized PSAP.
The terminating network may also validate the public safety answering point 180 via the federated permissioned eCall ledger (ledger structure 250)- and vice versa.

### Especially the terminating network

-- determines the additional data required by law (e.g. Cell ID, PDN ID,) and transforms the data received from the OEM CC according to the legal requirements. (e.g. eCall MSD);
-- accepts the call, completes the call with the data determined as required by the locally applicable regulation or entirely as complemented in the preceding steps and
-- routes the call to the emergency call center (public safety answering point 180).

Optionally, the terminating network (or the public safety answering point 180) checks the manufacturer ID / subscriber data / identifier / HPLMN ID / .../ stored in the ledger structure 250 and especially acknowledges the routing to the service provider 200 or original equipment manufacturer call center.
As prerequisites and basics, it is assumed according to the present invention that a ledger authority (on tier 1 - e.g. on EU level) verifies and enables access to the federated permissioned eCall ledger (or ledger structure 250) for stakeholders (network operators, service providers or original equipment manufacturer call centers, public safety answering points; national regulatory authorities might realize a tier 2).
It is advantageously possible according to the present invention that, e.g., national regulators or a recognized body assigns the required permissions, identities and policy (security, privacy etc..) to the federated permissioned eCall ledger (ledger structure 250) to the stakeholders (tier 3 and/or 4 might correspond to network operators, original equipment manufacturers, in-vehicle systems, public safety answering points, original equipment manufacturer call centers, authorities,..) specific to these countries/regions. This advantageously allows that all participants (or stakeholders) are able to write eCall specific data to the federated permissioned eCall ledger (ledger structure 250) with their respective identity.
The verification of the federated permissioned eCall ledger data follows the proof-of-authority principle - data blocks are generated based on the identity and weight of the hierarchical tier level.
Optionally, the emergency call accompanying data are also able to be stored in the federated permissioned eCall ledger structure 250 for documentation purposes for all parties / elements; this can, e.g., be used for purposes of regulatory compliance, traceability of the connection, quality control or e.g. billing.
Furthermore optionally, the service provider 200 or original equipment manufacturer call center verifies manufacturer IDs / subscriber data/ identifier / HPLMN ID / .../ stored in the federated permissioned eCall ledger structure 250 (only for appropriately equipped in-vehicle system, especially not for legacy in-vehicle system).
Especially and preferably according to the present invention, the distributed ledger (or ledger structure 250) is implemented as a federated permissioned ledger enabling pre-authorization of registration of participants (=nodes like national, regional or global governing instances or regulators, public safety answering points, original equipment manufacturer call center, ...) through the hierarchical tier architecture (highest tier = Tier 1 - most relevant).
This includes the policy definition for participants, i.e. the allowed operations to publish, read and modify data to ensure security and privacy.
Hierarchy levels control participant access, policies, and identity.
The consensus mechanism can be implemented as a Proof-of-Authority (PoA), where each identity of a participant is pre-approved by the authority group (higher level) for validation and creation of new blocks.
The identity of a participant is related to its registration, data published by it and reputation. And this is related to the registration of all data published by them and is the reputation. (Nodes) can also be weighted by preferred validation. Proof-of-authority validation is fast, low-power, and resistant to attacks.

### Variants / Modifications:

The concept of the present invention disclosure is exemplified for third party eCalls. In principle, the concept can be used to provide other "health- applications" with "112 qualified" access to emergency call centers.

## Claims

1. Method for conducting an emergency communication using a user equipment (20) in a country, or a geographic region within a country, being part of the coverage area of a mobile communication network (100),
wherein, in case of an emergency situation, a specific normal call is initiated, by the user equipment (20), to a service provider (200), wherein an emergency communication is initiated, from the service provider (200) and in dependency of the location of the user equipment (20), to a specific public safety answering point (180),
wherein, in order for the emergency communication to be conducted to the specific public safety answering point (180), a ledger structure (250) is involved and the method comprises the following steps:
-- in a first step, the service provider (200) transmits a first set of data to the ledger structure (250),
-- in a second step and in response to receiving the first set of data from the service provider, the ledger structure (250) transmits a second set of data to the service provider (200),
-- in a third step, the specific normal call is routed to the specific public safety answering point (180) and the specific public safety answering point (180) receives at least a third set of data comprising at least part of the first set of data and/or of the second set of data.

2. Method according to claim 1, wherein
-- either, in the third step, the service provider (200) routes the specific normal call to the specific public safety answering point (180) and transmits at least a part of the first set of data and/or of the second set of data to the specific public safety answering point (180)
-- or, in a fourth step subsequent to the second step and prior to the third step, the service provider (200) transmits at least a part of the first set of data and/or of the second set of data to a transit and/or terminating network (220), wherein the transit and/or terminating network (220) routes the specific normal call to the specific public safety answering point (180) and transmits at least a part of the first set of data and/or of the second set of data to the specific public safety answering point (180).

3. Method according to one of the preceding claims, wherein conducting the emergency communication, especially routing the specific normal call to the specific public safety answering point (180), involves or corresponds to at least one out of the following:
-- an emergency call, especially an emergency call related to a health-related emergency situation and/or related to an accident,
-- an eCall.

4. Method according to one of the preceding claims, wherein the ledger structure (250) corresponds to a federated permissioned ledger structure, especially an emergency call or eCall ledger structure,
wherein especially the ledger structure (250) corresponds to a data structure that is fraud-proof such that stored values are secured according to the current state of the art and/or the integrity of such data or stored values is able to be assured, especially by means of using proof-of-authority principles, especially based on the identity of the participating entities, wherein the participating entities especially comprise at least one or a plurality of the following:
-- service providers,
-- specific public safety answering point,
-- participating telecommunications networks,
-- user equipments, especially in-vehicle systems,
-- manufacturers of such user equipments or in-vehicle systems,
wherein especially the ledger structure (250) is used for realizing or performing at least one out of the following:
-- an emergency call transaction log or eCall transaction log,
-- a decentralized access to the ledger structure (250) is possible wherein a central instance authorizes access to the ledger structure (250).

5. Method according to one of the preceding claims, wherein the service provider (200) and/or the transit and/or terminating network (220) and/or the public safety answering point (180) is able to authenticate with respect to the ledger structure, wherein the authentication process involves smart contracts that are executed on the ledger structure (250).

6. Method according to one of the preceding claims, wherein the authentication process and/or the execution of smart contracts involve to obtain at least one hash value of the data to be verified, wherein especially the at least one hash value is compared with a hash value stored in the ledger structure (250), especially in a blockchain structure thereof, wherein based on such comparison a decision, especially regarding an authentication process and/or regarding a smart contract is able to be taken,
wherein especially a mutual authentication involves to store, in the ledger structure (250), a hash value of the data to be authenticated, and the authenticity of such data is able to be verified by means of comparing the respective hash value with the originally stored hash value.

7. Method according to one of the preceding claims, wherein the authentication process and/or the execution of smart contracts involve the service provider (200) and/or the transit and/or terminating network (220) and/or the public safety answering point (180) having a public key information and a private key information, wherein the entities use the public key information of other entities in order to assure the authenticity of their messages and/or data and wherein the entities use the private key information to sign transactions and to assure that only authorized entities are able to modify the ledger structure (250), wherein especially the data accompanying the call are stored for documentation in the ledger structure (250), wherein these data accompanying the call are able to be used for regulatory purposes, compliance, traceability of the connection, quality control or billing.

8. Method according to one of the preceding claims, wherein the first set of data comprises data related to the emergency situation, especially at least one out of the following:
-- an eCall minimum set of data (MSD)
-- PLMN ID of the VPLMN, especially to identify the network from which the call is originating, wherein the originating network can also be the HPLMN,
-- PLMN ID of the HPLMN, especially to allow for call backs in IMS-based systems, in case that the network from which the call is originating is not the HPLMN,
-- the position or location of the user equipment (20) and/orthe direction and/or velocity of the user equipment (20), especially to further improve the position or location information, to be deployed for traffic warnings/ traffic organization/guidance for other traffic, to be used for legal purposes - exceeding the speed limit or not-, insurance related liabilities,
-- time when the emergency occurred, especially to be able to identify the appropriate PSAP being operational at the given time or to identify the original call in case of a multitude of calls related to an incident - overload prevention - and for statistical purposes,
-- Public Call ID, especially the MSISDN and/or an uniform resource name, URN, especially to identify and/or validate the subscription and/or user concerned and/or to prevent spoofing of calls,
-- Preferred Language, especially to ascertain that the call is routed to a PSAP that in the best case is able to communicate in the indicated language, to guide helpers on the spot of the emergency in choosing the preferred language, to ensure that further other than spoken communication is presented in the preferred language,
-- Sensor Data such as Acceleration and/or Temperature and/or the number of occupants in a vehicle, the number of occupants that were in the vehicle at the time the call was initiated,
-- Vital indication data such as heartrate, blood pressure, body temperature,
-- Freight carried, Warning of dangerous substances, especially to assist rescue workers to attain an improved representation of the situation, minimize risks of rescue workers
-- Database entries of a health record, especially regarding allergies and/or pre-existing maladies, especially to improve the treatment of the people in need.

9. Method according to one of the preceding claims, wherein the second set of data comprises data provided by the ledger structure, especially at least one out of the following:
-- the applicable network to terminate the emergency call
-- and/or gateway for the subsequent network to handle the call -- the responsible public safety answering point for the type of emergency (180),
-- the public land mobile network ID of the network and/or gateway and/or its global navigation satellite system coordinates and/or its public key information,
-- routing information related to the emergency communication and/or related to the responsible network and/or gateway, especially gateway numbers and/or uniform resource names.

10. Method according to one of the preceding claims, wherein the third set of data comprises data transmitted to the specific public safety answering point (180), especially besides at least a part of the first set of data and/or of the second set of data and especially at least one out of the following:
-- the cell identifier information,
-- the packet data network identifier information.

11. User equipment for conducting an emergency communication using a user equipment (20) in a country, or a geographic region within a country, being part of the coverage area of a mobile communication network (100),
wherein, in case of an emergency situation, a specific normal call is initiated, by the user equipment (20), to a service provider (200), wherein an emergency communication is initiated, from the service provider (200) and in dependency of the location of the user equipment (20), to a specific public safety answering point (180),
wherein, in order for the emergency communication to be conducted to the specific public safety answering point (180), a ledger structure (250) is involved and the user equipment (20) is configured such that:
-- the service provider (200) transmits a first set of data to the ledger structure (250),
-- in response to receiving the first set of data from the service provider, the ledger structure (250) transmits a second set of data to the service provider (200),
-- the specific normal call is routed to the specific public safety answering point (180) and the specific public safety answering point (180) receives at least a third set of data comprising at least part of the first set of data and/or of the second set of data.

12. System or mobile communication network (100) for conducting an emergency communication using a user equipment (20) in a country, or a geographic region within a country, being part of the coverage area of a mobile communication network (100),
wherein, in case of an emergency situation, a specific normal call is initiated, by the user equipment (20), to a service provider (200), wherein an emergency communication is initiated, from the service provider (200) and in dependency of the location of the user equipment (20), to a specific public safety answering point (180),
wherein, in order for the emergency communication to be conducted to the specific public safety answering point (180), a ledger structure (250) is involved and the system or mobile communication network (100) is configured such that:
-- the service provider (200) transmits a first set of data to the ledger structure (250),
-- in response to receiving the first set of data from the service provider, the ledger structure (250) transmits a second set of data to the service provider (200),
-- the specific normal call is routed to the specific public safety answering point (180) and the specific public safety answering point (180) receives at least a third set of data comprising at least part of the first set of data and/or of the second set of data.

13. Program comprising a computer readable program code which, when executed on a computer or on a user equipment (20) or on a network node of a mobile communication network (100), or on a public safety answering point (180) or on a ledger structure (250) or on a service provider (200), or in part on a user equipment (20) and/or in part on a network node of a mobile communication network (100) and/or in part on a public safety answering point (180) and/or in part on a ledger structure (250) and/or in part on a service provider (200), causes the computer or the user equipment (20) or the network node of the mobile communication network (100) or the public safety answering point (180) or the ledger structure (250) or the service provider (200) to perform a method according one of claims 1 to 10.

14. Computer-readable medium comprising instructions which when executed on a computer or on a user equipment (20) or on a network node of a mobile communication network (100), or on a public safety answering point (180) or on a ledger structure (250) or on a service provider (200), or in part on a user equipment (20) and/or in part on a network node of a mobile communication network (100) and/or in part on a public safety answering point (180) and/or in part on a ledger structure (250) and/or in part on a service provider (200), causes the computer or the user equipment (20) or the network node of the mobile communication network (100) or the public safety answering point (180) or the ledger structure (250) or the service provider (200) to perform a method according one of claims 1 to 10.

## Amended claims

### Amended claims in accordance with Rule 137(2) EPC.

1. Method for conducting an emergency communication using a user equipment (20) in a country, or a geographic region within a country, being part of the coverage area of a mobile communication network (100),
wherein, in case of an emergency situation, a specific normal call is initiated, by the user equipment (20), to a service provider (200), wherein an emergency communication is initiated, from the service provider (200) and in dependency of the location of the user equipment (20), to a specific public safety answering point (180), wherein the specific normal call is a call that is received by a call center or a service provider and relates to a real emergency,
wherein, in order for the emergency communication to be conducted to the specific public safety answering point (180), a ledger structure (250) is involved and the method comprises the following steps:
-- in a first step, the service provider (200) transmits a first set of data to the ledger structure (250),
-- in a second step and in response to receiving the first set of data from the service provider, the ledger structure (250) transmits a second set of data to the service provider (200),
-- in a third step, the specific normal call is routed to the specific public safety answering point (180) and the specific public safety answering point (180) receives at least a third set of data comprising at least part of the first set of data and/or of the second set of data, wherein
-- either, in the third step, the service provider (200) routes the specific normal call to the specific public safety answering point (180) and transmits at least a part of the first set of data and/or of the second set of data to the specific public safety answering point (180)
-- or, in a fourth step subsequent to the second step and prior to the third step, the service provider (200) transmits at least a part of the first set of data and/or of the second set of data to a transit and/or terminating network (220), wherein the transit and/or terminating network (220) routes the specific normal call to the specific public safety answering point (180) and transmits at least a part of the first set of data and/or of the second set of data to the specific public safety answering point (180).

2. Method according to one of the preceding claims, wherein conducting the emergency communication, especially routing the specific normal call to the specific public safety answering point (180), involves or corresponds to at least one out of the following:
-- an emergency call, especially an emergency call related to a health-related emergency situation and/or related to an accident,
-- an eCall.

3. Method according to one of the preceding claims, wherein the ledger structure (250) corresponds to a federated permissioned ledger structure, especially an emergency call or eCall ledger structure,
wherein especially the ledger structure (250) corresponds to a data structure that is fraud-proof such that stored values are secured according to the current state of the art and/or the integrity of such data or stored values is able to be assured, especially by means of using proof-of-authority principles, especially based on the identity of the participating entities, wherein the participating entities especially comprise at least one or a plurality of the following:
-- service providers,
-- specific public safety answering point,
-- participating telecommunications networks,
-- user equipments, especially in-vehicle systems,
-- manufacturers of such user equipments or in-vehicle systems,
wherein especially the ledger structure (250) is used for realizing or performing at least one out of the following:
-- an emergency call transaction log or eCall transaction log,
-- a decentralized access to the ledger structure (250) is possible wherein a central instance authorizes access to the ledger structure (250).

4. Method according to one of the preceding claims, wherein the service provider (200) and/or the transit and/or terminating network (220) and/or the public safety answering point (180) is able to authenticate with respect to the ledger structure, wherein the authentication process involves smart contracts that are executed on the ledger structure (250).

5. Method according to one of the preceding claims, wherein the authentication process and/or the execution of smart contracts involve to obtain at least one hash value of the data to be verified, wherein especially the at least one hash value is compared with a hash value stored in the ledger structure (250), especially in a blockchain structure thereof, wherein based on such comparison a decision, especially regarding an authentication process and/or regarding a smart contract is able to be taken,
wherein especially a mutual authentication involves to store, in the ledger structure (250), a hash value of the data to be authenticated, and the authenticity of such data is able to be verified by means of comparing the respective hash value with the originally stored hash value.

6. Method according to one of the preceding claims, wherein the authentication process and/or the execution of smart contracts involve the service provider (200) and/or the transit and/or terminating network (220) and/or the public safety answering point (180) having a public key information and a private key information, wherein the entities use the public key information of other entities in order to assure the authenticity of their messages and/or data and wherein the entities use the private key information to sign transactions and to assure that only authorized entities are able to modify the ledger structure (250),
wherein especially the data accompanying the call are stored for documentation in the ledger structure (250), wherein these data accompanying the call are able to be used for regulatory purposes, compliance, traceability of the connection, quality control or billing.

7. Method according to one of the preceding claims, wherein the first set of data comprises data related to the emergency situation, especially at least one out of the following:
-- an eCall minimum set of data, MSD,
-- PLMN ID of the VPLMN, especially to identify the network from which the call is originating, wherein the originating network can also be the HPLMN,
-- PLMN ID of the HPLMN, especially to allow for call backs in IMS-based systems, in case that the network from which the call is originating is not the HPLMN,
-- the position or location of the user equipment (20) and/or the direction and/or velocity of the user equipment (20), especially to further improve the position or location information, to be deployed for traffic warnings/ traffic organization/guidance for other traffic, to be used for legal purposes - exceeding the speed limit or not-, insurance related liabilities,
-- time when the emergency occurred, especially to be able to identify the appropriate PSAP being operational at the given time or to identify the original call in case of a multitude of calls related to an incident - overload prevention - and for statistical purposes,
-- Public Call ID, especially the MSISDN and/or an uniform resource name, URN, especially to identify and/or validate the subscription and/or user concerned and/or to prevent spoofing of calls,
-- Preferred Language, especially to ascertain that the call is routed to a PSAP that in the best case is able to communicate in the indicated language, to guide helpers on the spot of the emergency in choosing the preferred language, to ensure that further other than spoken communication is presented in the preferred language,
-- Sensor Data such as Acceleration and/or Temperature and/or the number of occupants in a vehicle, the number of occupants that were in the vehicle at the time the call was initiated,
-- Vital indication data such as heartrate, blood pressure, body temperature,
-- Freight carried, Warning of dangerous substances, especially to assist rescue workers to attain an improved representation of the situation, minimize risks of rescue workers
-- Database entries of a health record, especially regarding allergies and/or pre-existing maladies, especially to improve the treatment of the people in need.

8. Method according to one of the preceding claims, wherein the second set of data comprises data provided by the ledger structure, especially at least one out of the following:
-- the applicable network to terminate the emergency call
-- and/or gateway for the subsequent network to handle the call -- the responsible public safety answering point for the type of emergency (180),
-- the public land mobile network ID of the network and/or gateway and/or its global navigation satellite system coordinates and/or its public key information,
-- routing information related to the emergency communication and/or related to the responsible network and/or gateway, especially gateway numbers and/or uniform resource names.

9. Method according to one of the preceding claims, wherein the third set of data comprises data transmitted to the specific public safety answering point (180), especially besides at least a part of the first set of data and/or of the second set of data and especially at least one out of the following:
-- the cell identifier information,
-- the packet data network identifier information.

10. User equipment for conducting an emergency communication using a user equipment (20) in a country, or a geographic region within a country, being part of the coverage area of a mobile communication network (100),
wherein, in case of an emergency situation, a specific normal call is initiated, by the user equipment (20), to a service provider (200), wherein an emergency communication is initiated, from the service provider (200) and in dependency of the location of the user equipment (20), to a specific public safety answering point (180), wherein the specific normal call is a call that is received by a call center or a service provider and relates to a real emergency,
wherein, in order for the emergency communication to be conducted to the specific public safety answering point (180), a ledger structure (250) is involved and the user equipment (20) is configured such that:
-- the service provider (200) transmits a first set of data to the ledger structure (250),
-- in response to receiving the first set of data from the service provider, the ledger structure (250) transmits a second set of data to the service provider (200),
-- the specific normal call is routed to the specific public safety answering point (180) and the specific public safety answering point (180) receives at least a third set of data comprising at least part of the first set of data and/or of the second set of data, wherein
-- either the service provider (200) routes the specific normal call to the specific public safety answering point (180) and transmits at least a part of the first set of data and/or of the second set of data to the specific public safety answering point (180)
-- or the service provider (200) transmits at least a part of the first set of data and/or of the second set of data to a transit and/or terminating network (220), wherein the transit and/or terminating network (220) routes the specific normal call to the specific public safety answering point (180) and transmits at least a part of the first set of data and/or of the second set of data to the specific public safety answering point (180).

11. System or mobile communication network (100) for conducting an emergency communication using a user equipment (20) in a country, or a geographic region within a country, being part of the coverage area of a mobile communication network (100),
wherein, in case of an emergency situation, a specific normal call is initiated, by the user equipment (20), to a service provider (200), wherein an emergency communication is initiated, from the service provider (200) and in dependency of the location of the user equipment (20), to a specific public safety answering point (180), wherein the specific normal call is a call that is received by a call center or a service provider and relates to a real emergency,
wherein, in order for the emergency communication to be conducted to the specific public safety answering point (180), a ledger structure (250) is involved and the system or mobile communication network (100) is configured such that:
-- the service provider (200) transmits a first set of data to the ledger structure (250),
-- in response to receiving the first set of data from the service provider, the ledger structure (250) transmits a second set of data to the service provider (200),
-- the specific normal call is routed to the specific public safety answering point (180) and the specific public safety answering point (180) receives at least a third set of data comprising at least part of the first set of data and/or of the second set of data, wherein
-- either the service provider (200) routes the specific normal call to the specific public safety answering point (180) and transmits at least a part of the first set of data and/or of the second set of data to the specific public safety answering point (180)
-- or the service provider (200) transmits at least a part of the first set of data and/or of the second set of data to a transit and/or terminating network (220), wherein the transit and/or terminating network (220) routes the specific normal call to the specific public safety answering point (180) and transmits at least a part of the first set of data and/or of the second set of data to the specific public safety answering point (180).

12. Program comprising a computer readable program code which, when executed on a computer or on a user equipment (20) or on a network node of a mobile communication network (100), or on a public safety answering point (180) or on a ledger structure (250) or on a service provider (200), or in part on a user equipment (20) and/or in part on a network node of a mobile communication network (100) and/or in part on a public safety answering point (180) and/or in part on a ledger structure (250) and/or in part on a service provider (200), causes the computer or the user equipment (20) or the network node of the mobile communication network (100) or the public safety answering point (180) or the ledger structure (250) or the service provider (200) to perform a method according one of claims 1 to 9.

13. Computer-readable medium comprising instructions which when executed on a computer or on a user equipment (20) or on a network node of a mobile communication network (100), or on a public safety answering point (180) or on a ledger structure (250) or on a service provider (200), or in part on a user equipment (20) and/or in part on a network node of a mobile communication network (100) and/or in part on a public safety answering point (180) and/or in part on a ledger structure (250) and/or in part on a service provider (200), causes the computer or the user equipment (20) or the network node of the mobile communication network (100) or the public safety answering point (180) or the ledger structure (250) or the service provider (200) to perform a method according one of claims 1 to 9.
